# EUROPÄISCHE PATENTSCHRIFT

(11) **EP 0 417 625 B1**
(45) Veröffentlichungstag und Bekanntmachung des Hinweises auf die Patenterteilung: **25.10.1995**
(21) Anmeldenummer: 90117056.3
(22) Anmeldetag: 05.09.1990
(51) Int. Cl.: H04N 1/04, H04N 1/10, H04N 1/40

(54) **Verfahren zur Datenaufnahme mittels eines, mindestens eine Detektorzeile enthaltenden Detektorarrays und Vorrichtung zur Durchführung des Verfahrens**
Data pick-up method using a detector array comprising at least one detector line, and apparatus carrying out the method
Procédé pour la lecture de données utilisant une rangée de détecteurs comportant au moins une ligne de détecteurs et appareil pour la mise en oeuvre du procédé

(30) Priorität: 11.09.1989 DE 3930290
(43) Veröffentlichungstag der Anmeldung: 20.03.1991
(73) Patentinhaber: Firma Carl Zeiss, D-73446 Oberkochen (DE); CARL ZEISS-STIFTUNG HANDELND ALS CARL ZEISS, D-89518 Heidenheim (Brenz) (DE)
(72) Erfinder: Krastel, Heinz, D-7082 Oberkochen (DE); Felle, Karl, D-7082 Oberkochen (DE); Hobbie, Dierk, Dr., D-7923 Königsbronn (DE); Faust, Hans-W., D-7920 Heidenheim (DE); Kaiser, Richard J., Huntsville, Alabama 35806 (US); Kuehlthau, Robert I., Huntsville, Alabama 35801 (US); Pinard, Alward I., Westford, Massachusetts 01886 (US); Wylie, Gary D., Harvest, Alabama 35749 (US)

(56) Entgegenhaltungen:
- EP-A- 0 254 235
- EP-A- 0 267 793
- WO-A-88/06825
- DE-A- 3 521 482
- DE-C- 3 630 739
- US-A- 4 682 242
- US-A- 4 751 377
- JOURNAL OF APPLIED PHOTOGRAPHIC ENGINEERING Bd. 8, Nr. 1, Februar 1982, ROCHESTER, NY, USA Seiten 15 - 22; J.E.BOYD: 'DIGITAL IMAGE FILM GENERATION-FROM THE PHOTOSCIENTIST'S PERSPECTIVE'

## Beschreibung

Die Erfindung betrifft ein Verfahren zur Datenaufnahme mittels eines, mindestens eine Detektorzeile enthaltenden Detektorarrays, bei welchem ein auszuwertendes Objekt und das Detektorarray relativ zueinander bewegt und die dabei erzeugten Signale zur Auswertung einem Rechner zugeführt werden sowie eine Vorrichtung zur Durchführung des Verfahrens.

Die Digitalisierung der beim Abtasten von Objekten und Bildern erhaltenen Signale erfolgt mittels Datenaufnahmegeräten, welche auch als Scanner bezeichnet werden. Die Digitalisierung ist immer dann notwendig, wenn ein Bild in einem Rechner gespeichert und gegebenenfalls weiterverarbeitet werden soll. Dabei wird die beim Arbeitsvorgang gewonnene zweidimensionale analoge Information in Bildpunkte bzw. Pixel zerlegt, welche einen unterschiedlichen Grauwert besitzen. Die Anwendungsbreite der Digitalisierung mit Bildaufnahmegeräten ist sehr groß und umfaßt neben CAD, CAE, Landkartenerstellung, Werbung, Kunst, Simulation, Chemie und Physik heute fast alle Bereiche, in denen Bildinformationen vorkommen. Die dabei an die Geräte zu stellenden Anforderungen sind entsprechend unterschiedlich hoch. Selbst wenn man eine Bildaufnahme höchster Qualität anstrebt, treten zwangsläufig unvermeidbare Informationsverluste auf. Diese Verluste sind bedingt durch die notwendige Zerlegung der zweidimensionalen analogen Information in einzelne Pixel mit einer gewissen Größe und einem definierten Abstand voneinander, wobei die Pixel über eine festgelegte Grauwertabstufung verfügen. Bei einer späteren Bildverarbeitung im Rechner wird mittels mathematischer Algorithmen dann versucht, diese Informationsverluste in erträglichen Größenordnungen zu halten.

Wenngleich die heute angewandten mathematischen Algorithmen erstaunliche Resultate hervorbringen, so können sie doch im Bildsignal nicht mehr vorhandene Informationen, die auf dem aufgenommenen Objekt vorhanden waren, nicht oder nur unvollständig wieder zurückgewinnen. Es muß deshalb das angestrebte Ziel sein, durch eine optimale Datenaufnahme die spätere Wirksamkeit der Bildverarbeitung nicht unnötigerweise zu begrenzen. Dieses Problem ist nicht neu und es wird seit langem daran gearbeitet.

Aus der DE-C- 36 30 739 ist ein Verfahren bekannt, bei dem während der Datenaufnahme eines Bildes ein Versatz des auf zunehmenden Detektorarrays erfolgt. Dieser Versatz ist sehr klein und erlaubt eine Erfassung der nicht aufgenommenen Zwischenräume zwischen den einzelnen Detektorelementen des Detektorarrays. Die dadurch erhaltene doppelte Datenmenge pro aufgenommenen Objekt erlaubt im Rechner eine bessere und genauere Rekonstruktion der analogen Bildinformation. Allerdings vergrößert die doppelte Datenmenge auch die Bearbeitungszeit sowohl bei der Datenaufnahme als auch bei der Verarbeitung im Rechner.

In dieselbe Richtung zielen die Versuche, die Anzahl der Bildpunkte (Pixel) pro Aufnahme zu vergrößern. Abgesehen von den technologischen Schwierigkeiten bei der Herstellung eines Detektorarrays mit sehr vielen Einzeldetektorflächen tritt als weitere Schwierigkeit zumindest eine Verringerung der Fläche der einzelnen Detektoren auf, welche normalerweise eine stärkere Bestrahlung, gegebenenfalls auch eine längere, notwendig macht.

Die Auswertung größerer Bilder erfolgt üblicherweise durch Abtastung mehrerer kleiner Bildausschnitte. Diese Ausschnitte müssen bei der Auswertung aneinandergereiht werden und zwar so, daß sich das Aufnahmeraster des ersten Bildes lückenlos an das Aufnahmeraster des zweiten Bildes anschließt usw. Um ein einheitliches Aufnahmeraster zu erhalten, muß bei den Auswerteverfahren nach dem Stand der Technik mittels mathematischer Algorithmen unter hohem Zeitaufwand ein einheitliches Raster erzeugt werden. Das dabei erzeugte Raster hat aber Abweichungen verglichen mit einem reellen Raster auf dem Bild, da zu seiner Berechnung im Rechner Interpolationen und Gewichtungen vorgenommen werden mußten. Alle bekannten Verfahren zur Digitalisierung von Bildern haben bis heute dieses geometrische Problem bei der Datenaufnahme nicht befriedigend gelöst.

Bei der photogrammetrischen Auswertung von Luftbildern existiert das gleiche Problem, da es nicht immer mit vertretbarem Zeitaufwand möglich ist die auszuwertenden Bilder in genau derselben Position und Orientierung auf den Bildwagen auf zulegen. Ganz besonders gravierend tritt dieses Problem bei der photogrammetrischen Auswertung von Stereo-Bildpaaren auf. Die einzelnen Bilder solcher Bildpaare unterscheiden sich aus aufnahmetechnischen Gründen etwas bezüglich der sogenannten Kantung, d.h. sie sind leicht gegeneinander verkippt. Um solche Bildpaare aber auswerten zu können ist es notwendig, daß die Abtastraster in beiden Bildern übereinstimmen.

Neben dem geometrischen Problem bei der Datenaufnahme existiert die Aufgabe ungleiche Empfindlichkeiten der Detektorelemente, die fertigungsbedingt auftreten und auch Ungleichmäßigkeiten der Beleuchtung zu korrigieren, so daß eine eindeutige Zuordnung zwischen den Detektorsignalen und den Grauwerten der abgetasteten Bildelemente gegeben ist.

Diese Aufgabe wird bei einer aus der DE-A- 23 53 299 bekannten Abtastvorrichtung dadurch gelöst, daß während der Abtastung eines Standardhintergrundes oder eines Weißpegels ein Empfindlichkeitsprofil des Detektorarrays gewonnen wird. Dieses wird in digitaler Form abgespeichert und dann im Betrieb von seiner digitalen Form in eine Analogform umgewandelt und zur Korrektur des Videoinformationssignals benutzt. Dieses Verfahren ist wegen der doppelten Wandlung der Signale des Empfindlichkeitsprofils umständlich und fehlerempfindlich.

Weitere Korrekturverfahren sind aus der US-A- 43 17 134 und der DE-C- 36 30 749 bekannt, doch sind auch diese Verfahren nicht geeignet eine hinreichend schnelle und genaue Korrektur zu gewährleisten.

Es ist die Aufgabe der vorliegenden Erfindung ein Verfahren zur Datenaufnahme mittels eines, mindestens eine Detektorzeile enthaltenden Detektorarrays zu schaffen, das es ermöglicht mit ein- und demselben Detektorarray das Abtastraster optimal dem jeweils auszuwertenden Objekt anzupassen. Diese Aufgabe wird erfindungsgemäß durch ein Verfahren nach dem kennzeichnenden Teil des Anspruchs 1 gelöst.

Das Verfahren nach der Erfindung hat den Vorteil, daß durch Festlegung der Abtastrichtung und der entsprechenden Winkelposition des Detektorarrays anhand von Informationen im auszuwertenden Objekt das Abtastraster anhand von objektiven Kriterien und deshalb auch jederzeit reproduzierbar bestimmt wird. Dadurch wird gewährleistet, daß das Abtastraster weitgehend unabhängig von der Positionierung des auszuwertenden Objektes bei der Datenaufnahme ist. Dies ist insbesondere bei der Datenaufnahme von Bildserien von ganz besonderem Vorteil, da für jedes Einzelbild das optimale Abtastraster gewählt werden kann, so daß die Folge der Bildpunkte immer dieselbe Ausrichtung besitzt. Dies macht eine spätere Ausrichtung durch den Rechner mittels mathematischer Algorithmen unnötig, so daß die Genauigkeit der Abtastsignale auch direkt die Genauigkeit der Auswertung bestimmt.

Diese Tatsache ist von ganz besonderem Vorteil bei der photogrammetrischen Auswertung von Stereo-Bildpaaren, da unabhängig von der Kantung der Einzelbilder das Abtastraster in beiden Bildern optimal gewählt werden kann, so daß die Bildsignale direkt und ohne die Notwendigkeit einer Umrechnung ausgewertet werden können.

Bei dem Auswerteverfahren nach der Erfindung kann die Relativbewegung zwischen Objekt und Detektorarray kontinuierlich oder diskontinuierlich erfolgen, entsprechend der jeweiligen Aufgabe und des jeweiligen verwendeten Detektorarrays.

Die Datenaufnahme kann bei flachen Objekten entweder in Auflicht oder in Durchlicht erfolgen. Eine Datenaufnahme in Durchlicht ist insbesondere bei der photogrammetrischen Auswertung von Luftbildern vorteilhaft, da direkt der aufgenommene Film verwendet werden kann. Dies garantiert die optimale Erfassung der Bildinformation.

Die im auszuwertenden Objekt enthaltenen und zur Festlegung der Abtastrichtung und damit des Abtastrasters dienenden Informationen können beispielsweise bei der Auswertung von Luftbildern sogenannte Landmarken, d.h. im Gelände markierte Punkte sein. Diese Marken erscheinen im Luftbild und werden dann als Referenzpunkte bei der späteren Auswertung der Bilder verwendet. Vor der eigentlichen Datenaufnahme wird dazu das Luftbild nach diesen Referenzpunkten abgesucht. Befinden sich diese in vorher bekannten Bildsegmenten, so kann sich das Absuchen des Bildes auf diese Segmente beschränken. Nachdem die Referenzpunkte durch mathematische Algorithmen oder durch interaktive Bearbeitung durch den Bediener gefunden wurden, ergibt sich aus ihren Bildkoordinaten die Orientierung für die Drehung des Detektorarrays und für die Festlegung der Abtastrichtung. Bei interaktiver Bearbeitung können diese Referenzpunkte vom Benutzer entweder auf Grund einer groben Obersichts-Abtastung des ganzen Bildes oder z.B. mit Hilfe eines gesonderten Abzuges des abzutastenden Bildes erkannt und festgelegt werden.

Das hier geschilderte Verfahren ist Gegenstand des Anspruchs 2.

Anspruch 3 beschreibt das zweckmäßige Verfahren zur Abtastbewegung durch Bewegen des Objektes in zwei zueinander senkrechten Koordinatenrichtungen. Durch diese kombinierte Bewegung erfolgt die Abtastung in der vorbestimmten Abtastrichtung, wobei das stehende Detektorarray so gedreht ist, daß seine Detektorzeilen senkrecht zur Abtastrichtung stehen.

Die notwendige Kalibrierung des Detektorarrays erfolgt vorteilhaft vor der eigentlichen Datenaufnahme und gegebenenfalls zusätzlich nach der Abtastung von n Streifen des Bildes, wie dies in Anspruch 4 angegeben ist. Dabei ist es vorteilhaft, daß die Kalibrierung auf Kalibrierfeldern mit definierter Grauwertabstufung außerhalb des auszuwertenden Objektes erfolgt und die dabei gewonnenen Daten im Speicher eines Rechners zwischengespeichert werden, wie dies in Anspruch 5 beschrieben ist. Zur Kalibrierung des Detektorarrays wird dieses über ein Kalibrierfeld geführt, welches mindestens zwei Streifen mit unterschiedlichen Grauwertstufen aufweist. Die dabei gewonnenen Detektorsignale werden in digitale Signale umgewandelt und auf gleiche Werte korrigiert. Die den einzelnen Detektorelementen zugeordneten Korrekturf aktoren werden im Rechner abgelegt. Beim eigentlichen Abtastvorgang werden die analog gewonnenen Bildsignale in Digitalsignale umgewandelt und danach mit den im Speicher abgelegten digitalen Korrekturfaktoren durch digitale Umrechnungen korrigiert.

Die Vorrichtung zur Durchführung des Verfahrens nach der Erfindung ist Gegenstand des Ansprüches 7. Das als photographische Aufnahme, beispielsweise als Luftbildaufnahme vorliegende auszuwertende Objekt ist hier auf einem Bildwagen angeordnet, der mittels mindestens zweier Antriebsmotoren rechnergesteuert entlang einer vorbestimmten Abtastrichtung bewegt wird. Das Detektorarray ist drehbar angeordnet, so daß es in die gewünschte Position gebracht werden kann. Diese Drehung erfolgt vorzugsweise rechnergesteuert durch einen gesonderten Motor.

Um eine exakte Bewegung des Bildwagens relativ zum feststehenden Detektorarray zu gewährleisten ist es vorteilhaft gemäß Anspruch 8 eine Regelschleife mit Positionsrückmeldung aufzubauen.

Die zur Kalibrierung des Detektorarrays dienenden Kalibrierfelder sind zweckmäßig gemäß Anspruch 9 außerhalb der Bildaufnahmefläche angeordnet. Es hat sich als vorteilhaft erwiesen gemäß Anspruch 10 vor der Lichtquelle auswechselbare Filter anzuordnen, z.B. für die Digitalisierung von farbigen Bildern.

Die Erfindung wird im folgenden anhand der in den Figuren 1 - 3 der beigefügten Zeichnungen dargestellten Ausführungsbeispiele näher beschrieben. Dabei zeigen im einzelnen:
- Fig. 1: eine schematische Darstellung eines Ausführungsbeispiels für eine Vorrichtung nach der Erfindung;
- Fig. 2: eine Aufsicht auf die Bildaufnahmefläche des Bildwagens der Vorrichtung nach Fig. 1;
- Fig. 3: ein Ausführungsbeispiel für eine Einrichtung zur Bewegung des Bildwagens.

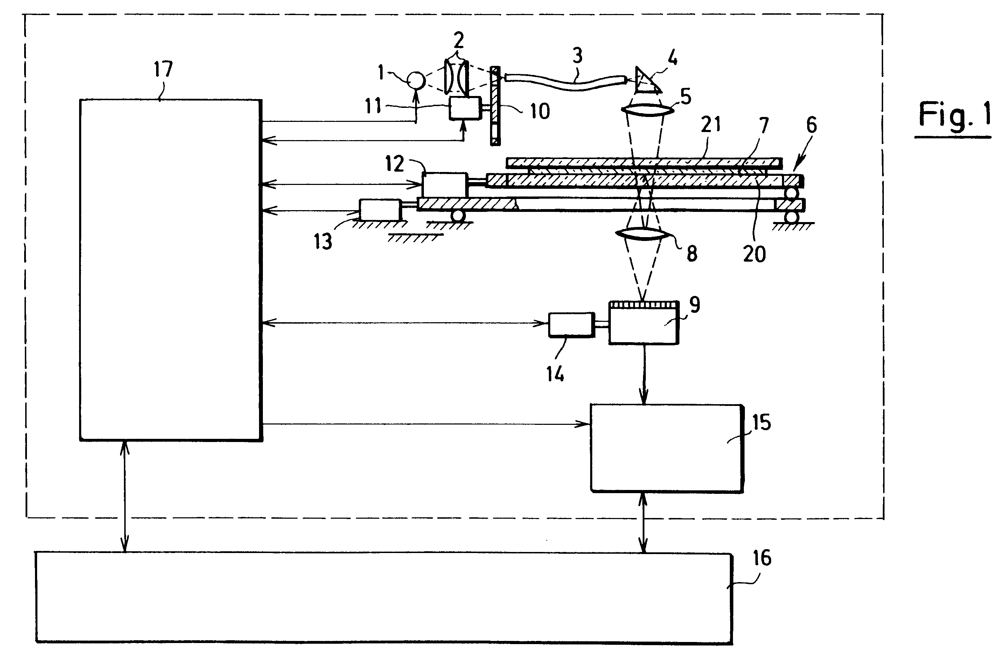

In Fig. 1 ist mit (1) eine Lichtquelle bezeichnet, welche mittels einer Optik (2) auf die Lichteintrittsfläche einer Glasfaserleitung (3) abgebildet wird. Nach dem Austritt aus dieser Faser wird das Licht mittels eines Prismas (4) umgelenkt und beleuchtet über eine Linse (5) einen vorgewählten Bereich des auf einem Bildwagen (6) angeordneten Objektes (7). Dieses Objekt kann im dargestellten Beispiel eine transparente Luftbildaufnahme sein. Mittels einer Optik (8) wird der beleuchtete Bereich des Bildes (7) auf ein Detektorarray (9) abgebildet, welches im dargestellten Beispiel ein linienförmiges Array sein kann. Zwischen der Optik (2) und der Glasfaserleitung (3) ist ein Filterrad (10) angeordnet, das verschiedene Filter enthält, die als Farb- oder Graufilter oder auch als Kombination solcher Filter ausgebildet sein können. Das Filterrad (10) wird mittels eines Motors (11) in eine vorgewählte Position bewegt.

Der Bildwagen (6) ist mittels zweier Motoren (12 und 13) in zwei senkrecht zueinander stehenden Koordinatenrichtungen zueinander bewegbar. Ein weiterer Motor (14) dient zur Drehung des Detektorarrays (9) in eine vorgewählte Winkelposition.

Das Detektorarray (9) erzeugt elektrische Signale, deren Höhe von der Intensität des durch die Vorlage (7) transmittierten Lichtes abhängt. Die vom Array (9) erzeugten Signale gelangen zu einem Interface (15). Von dort werden sie einem Zentralrechner (16) zugeführt.

Mit (17) ist ein weiterer Rechner bezeichnet, welcher sowohl die Lichtquelle (1) als auch das Filterrad (10) steuert und damit die optimale Beleuchtung des auszuwertenden Objektes (7) festlegt.

Der Rechner (17) steuert weiterhin die Motoren (12 und 13) zum Antrieb des Bildwagens sowie den Motor (14) zur Drehung des Detektorarrays (9) in eine vorgewählte Position.

Das auszuwertende Bild (7) liegt bei der Datenaufnahme auf der ebenen, transparenten Fläche (20) des Bildwagens (6). Mit (21) ist eine durchsichtige Abdeckung bezeichnet, welche das Bild (7) fest auf die Auflage (20) preßt, um während der Datenaufnahme eine möglichst ebene Lage des Bildes zu gewährleisten.

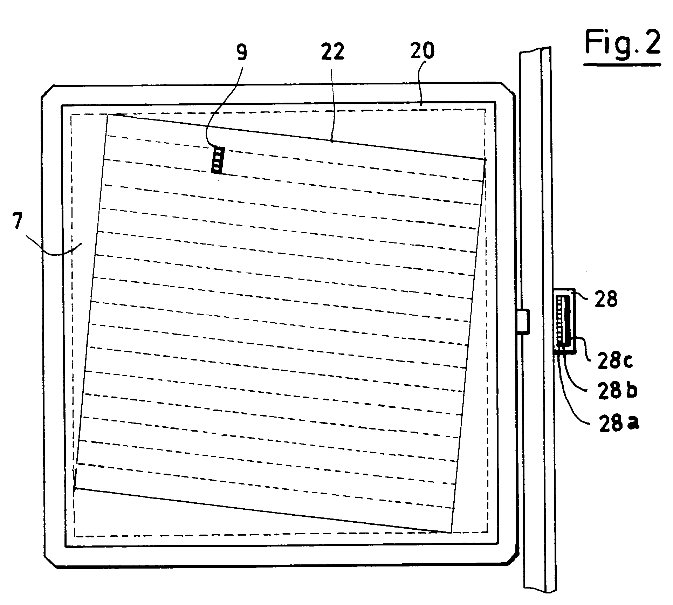

In Figur 2 ist eine Aufsicht auf die Aufnahmefläche (20) des Bildwagens (6) dargestellt. Auf dieser Aufnahmefläche liegt das auszuwertende Bild (7). Zunächst wird in der eingangs beschriebenen Art eine erste Datenaufnahme durchgeführt, um beispielsweise die im Bild (7) enthaltenen Landmarken festzustellen. Diese Signale werden dann dazu verwendet automatisch durch digitale Berechnung oder interaktiv die Abtastrichtung festzulegen, welche in Figur 2 mit (22) bezeichnet ist. Zugleich mit der Festlegung der Abtastrichtung wird das Detektorarray (9) mittels des Motors (14) vom Rechner (17) so gedreht, daß seine Detektorzeile genau senkrecht zur Abtastrichtung (22) steht.

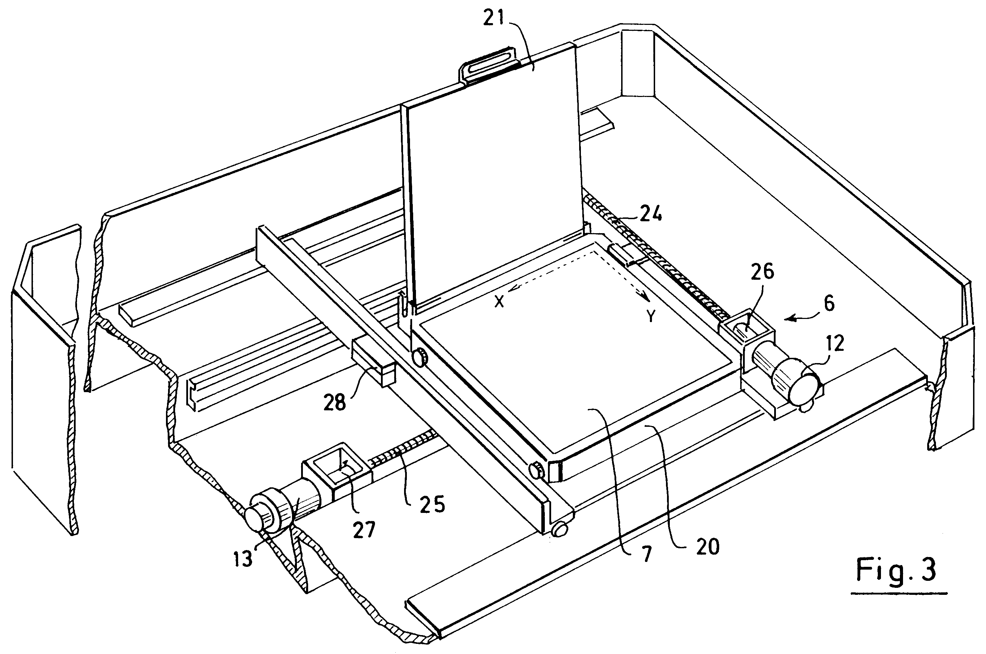

Beim nachfolgenden Abtastvorgang wird der Bildwagen (6) mittels der Motoren (12 und 13) so bewegt, daß sich das Bild (7) innerhalb der in Figur 2 angedeuteten Grenzen in Abtastrichtung relativ zum feststehenden Detektorarray (9) bewegt. Da die Länge der Detektorzeile (9) geringer ist als die Länge des auszuwertenden Bildes wird dieses Bild streifenweise abgetastet, wobei die Breite der Streifen gleich der Länge des Bildes des Detektorarrays (9) ist. Diese Streifen sind in Figur 2 durch gestrichelte Linien angedeutet. Die Bewegung des Bildwagens (6) in Abtastrichtung (22) erfolgt durch Betätigung der beiden Antriebsmotore (12 und 13) über den Rechner (17). Wie Figur 3 zeigt treiben die beiden Motoren (12 und 13) den Bildwagen über Spindeln (24 und 25) in zwei, senkrecht aufeinander stehenden Koordinatenrichtungen an, welche mit x und y bezeichnet sind. Durch entsprechende Betätigung der Motoren (12 und 13) läßt sich jede vorgewählte Abtastrichtung verifizieren.

Mit jedem der Antriebsmotoren (12 und 13) ist eine Positionsregelungseinrichtung (26 bzw. 27) verbunden, deren Signale dem Rechner (17) zugeführt werden. Damit ist ein Regelkreis gebildet, welcher mit Hilfe von Rückmeldungen von Impulsgebern für die x- und y-Achsen gewährleistet, daß der Antrieb des Bildwagens (6) gleichmäßig und genau in der vorgewählten Abtastrichtung (22) erfolgt.

Außerhalb des Abtastfeldes ist ein Kalibrierfeld (28) angeordnet, welches in den Figuren 2 und 3 zu sehen ist. Vor dem eigentlichen Abtastvorgang oder auch nach Abfahren einer vorbestimmten Anzahl von Bildstreifen wird der Bildwagen (6) so bewegt, daß das Kalibrierfeld (28) auf das Detektorarray (9) abgebildet wird. Dieses Kalibrierfeld enthält drei Streifen (28a - 28c) mit unterschiedlichem Grauwert. Während des Kalibriervorganges werden Korrekturfaktoren gewonnen, welche die Empfindlichkeitsunterschiede der einzelnen Detektorelemente und evtl. Ungleichmäßigkeiten der Beleuchtung ausgleichen. Diese Korrekturf aktoren werden im Interface (15) als Digitalwerte abgelegt. Beim eigentlichen Abtastvorgang werden die analog gewonnenen Bildsignale digital gewandelt und durch digitale Umrechnungen korrigiert.

Die in den Figuren 1 - 3 dargestellte Vorrichtung findet besonders vorteilhafte Anwendung zur photographischen Auswertung von Luftbildaufnahmen insbesondere von Stereo-Luftbildaufnahmen. In diesem Fall wird als auszuwertende Vorlage (7) direkt das Negativ der Luftbildaufnahme verwendet.

## Patentansprüche

1. Verfahren zur Datenaufnahme mittels eines mindestens eine Detektorzeile enthaltenden Detektorarrays, bei dem ein auszuwertendes Objekt und das Detektorarray relativ zueinander bewegt und die dabei erzeugten Signale zur Auswertung einem Rechner zugeführt werden, dadurch gekennzeichnet, daß zunächst anhand von Informationen - insbesondere Rastermarken -im auszuwertenden Objekt (7) die Abtastrichtung (22) festgelegt wird, daß danach das Detektorarray (9) so gedreht wird, daß seine Detektorzeilen senkrecht zur Abtastrichtung (22) stehen und daß bei der anschließenden Abtastung das Detektorarray (9) in der festgelegten Abtastrichtung (22) streifenförmig relativ zum Objekt (7) bewegt wird.

2. Verfahren nach Anspruch 1, dadurch gekennzeichnet, daß mindestens eine erste Datenaufnahme durchgeführt und die dabei gewonnenen Signale dazu verwendet werden, im Rechner (16) automatisch oder interaktiv die Abtastrichtung (22) festzulegen.

3. Verfahren nach Anspruch 1 und 2, dadurch gekennzeichnet, daß die Abtastung durch Bewegen des Objektes (7) in zwei zueinander senkrechten Koordinatenrichtungen (x, y) erfolgt.

4. Verfahren nach Anspruch 1 und 2, dadurch gekennzeichnet, daß vor der Datenaufnahme und gegebenenfalls zusätzlich nach Abtastung von n Streifen eine Kalibrierung des Detektorarrays (9) erfolgt.

5. Verfahren nach Anspruch 4, dadurch gekennzeichnet, daß die Kalibrierung auf Kalibrierfeldern (28) mit definierter Grauwertabstufung außerhalb des auszuwertenden Objektes (7) erfolgt und die dabei gewonnenen Daten im Speicher eines Rechners zwischengespeichert werden.

6. Verfahren nach Anspruch 1 bis 5, gekennzeichnet durch die Anwendung zur photogrammetrischen Auswertung von Luftbildaufnahmen, insbesondere von Luftbild-Stereo-Aufnahmen.

7. Vorrichtung zur Durchführung des Verfahrens nach Anspruch 1 - 3, bei der das auszuwertende Objekt als photographische Aufnahme (7) vorliegt, die auf einem Bildwagen (6) angeordnet ist, mit einer Einrichtung (1 - 5) zur gleichmäßigen Beleuchtung eines Objektfeldes, einer Optik (8) zur Abbildung dieses Objektfeldes auf ein, mindestens eine Detektorzeile enthaltendes Detektorarray (9) und einem Rechner (16) zur Auswertung der vom Detektorarray erzeugten Signale, dadurch gekennzeichnet, daß das Detektorarray (9) in unterschiedliche Positionen drehbar angeordnet ist und daß an dem die auszuwertende Aufnahme tragenden Bildwagen (6) mindestens zwei Antriebsmotoren (12, 13) zur rechnergesteuerten Bewegung des Bildwagens entlang einer vorbestimmten Abtastrichtung (22) angebracht sind.

8. Vorrichtung nach Anspruch 7, dadurch gekennzeichnet, daß mit den Antriebsmotoren (12, 13) für den Bildwagen (6) Positionsregeleinrichtungen (26, 27) mit einer Verbindung zu einem Rechner (17) gekoppelt sind.

9. Vorrichtung nach Anspruch 7 zur Durchführung des Verfahrens nach einem der Ansprüche 4 und 5, dadurch gekennzeichnet, daß am Bildwagen (6) außerhalb der Bildaufnahmefläche mindestens ein Kalibrierfeld (28) angebracht ist.

10. Vorrichtung nach Anspruch 7, dadurch gekennzeichnet, daß vor der Lichtquelle (1) auswechselbare Filter (10) angeordnet sind.

## Claims

1. Method for the recording of data by means of a detector array containing at least one row of detectors, wherein an object to be evaluated and the detector array are moved relative to each other and the signals generated in the process are transmitted to a computer for processing, characterized by the fact that the scan direction (22) is first determined using information - ground marks in particular - in the object to be evaluated (7), that the detector array (9) is then turned in such a way that its detector rows are at right angles to the scan direction (22) and that the detector array is moved swathwise in the scan direction defined and relative to the object (7) during the subsequent scanning process.

2. Method according to claim 1, characterized by the fact that at least one initial recording of data is performed and the signals obtained in the process are used to determine the scan direction (22) either automatically by computer or using an interactive procedure.

3. Method according to claims 1 and 2, characterized by the fact that scanning is performed by moving the object (7) in two coordinate directions (x,y) at right angles to each other.

4. Method according to claims 1 and 2, characterized by the fact that the calibration of the detector array (9) is performed prior to the recording of data and, if necessary, additionally after the scanning of n swaths.

5. Method according to claim 4, characterized by the fact that calibration fields (28) including defined grey levels and located outside the object to be evaluated (7) are used for calibration and that the data obtained in the process is transferred to an intermediate memory.

6. Method according to claims 1 to 5, characterized by the fact that it is used for the photogrammetric plotting of aerial photographs, and stereo aerial photographs in particular.

7. Device for performing the method according to claims 1 - 3 wherein the object is a photographic picture (7) positioned on a photo carriage (6), comprising a unit (1 - 5) for the uniform illumination of an object field, an optical system (8) for imaging this object field on a detector array (9) containing at least one row of detectors, and a computer (16) for the processing of the signals generated by the detector array (9), characterized by the fact that the detector array (9) can be turned into different positions and that the photo carriage (6) supporting the photo to be plotted features at least two drive motors (12, 13) to ensure the computer-controlled movement of the photo carriage in a predetermined scan direction (22).

8. Device according to claim 7, characterized by the fact that the drive motors (12, 13) of the photo carriage (6) are coupled with the position-regulating devices (26, 27) which are connected to a computer (17).

9. Device according to claim 7 for performing the method according to one of the claims 4 and 5, characterized by the fact that at least one calibration field (28) is provided on the photo carriage (6) outside the photo support surface.

10. Device according to claim 7, characterized by the fact that interchangeable filters (10) are positioned in front of the light source (1).

## Revendications

1. Procédé pour la saisie de données au moyen d'une configuration de détecteurs comprenant au moins une barrette de détecteurs, selon lequel un objet à restituer et la configuration de détecteurs sont déplacés l'un par rapport à l'autre, les signaux ainsi générés étant transmis à un ordinateur en vue de l'exploitation, caractérisé en ce que l'on détermine d'abord la direction de palpage (22) à l'aide d'informations contenues dans l'objet (7) - de repères de balayage notamment - et que l'on tourne ensuite la configuration de détecteurs (9) de manière à ce que l'orientation de ses barrettes de détecteurs soit perpendiculaire à la direction de palpage (22) et à ce que la configuration de détecteurs (9) soit, lors du processus de balayage, déplacée par rapport à l'objet (7) par bandes le long de la direction de balayage ainsi déterminée (22).

2. Procédé selon la revendication 1, caractérisé en ce que l'on effectue une première saisie de données au moins et que l'on utilise les signaux ainsi obtenus pour déterminer la direction de balayage (22) dans l'ordinateur (16) de manière automatique ou interactive.

3. Procédé selon les revendications 1 et 2, caractérisé en ce que le balayage s'effectue par déplacement de l'objet (7) selon deux axes de coordonnées (x, y) qui sont perpendiculaires l'un par rapport à l'autre.

4. Procédé selon les revendications 1 et 2, caractérisé en ce qu'un calibrage de la configuration de détecteurs (9) est exécuté avant la saisie de données et, le cas échéant, après le balayage de n bandes de l'image.

5. Procédé selon la revendication 4, caractérisé en ce que le calibrage est fait en dehors de l'objet à restituer (7), sur des champs de calibrage (28) présentant un échelonnement défini de valeurs de gris et que les données ainsi obtenues sont entreposées dans la mémoire d'un ordinateur.

6. Procédé selon les revendications 1 à 5, caractérisé en ce qu'il est appliqué à la restitution photogrammétrique de prises de vues aériennes, d'aérovues stéréoscopiques notamment.

7. Dispositif pour la mise en oeuvre du procédé selon les revendications 1 à 3, où l'objet à restituer est une photographie (7) disposée sur un chariot porte-cliché (6), comprenant un groupe d'éléments (1 - 5) servant à l'éclairage homogène d'un champ d'objet, une optique (8) pour la projection dudit champ d'objet sur une configuration de détecteurs (9) composée d'au moins une barrette de détecteurs et un ordinateur (16) servant à exploiter les signaux produits par la configuration de détecteurs (9), caractérisé en ce que ladite configuration de détecteurs (9) est orientable par rotation de manière à pouvoir occuper différentes positions angulaires et en ce qu'au moins deux moteurs d'entraînement (12, 13) sont adaptés au chariot (6) portant la photographie à restituer, qui servent à déplacer ledit chariot le long d'une direction de palpage (22) prédéterminée en fonction des signaux de commande fournis par un ordinateur.

8. Dispositif selon la revendication 7, caractérisé en ce que les moteurs (12, 13) d'entraînement du chariot (6) sont reliés à des dispositifs d'asservissement (26, 27) communiquant avec un ordinateur (17).

9. Dispositif selon la revendication 7 pour la mise en oeuvre du procédé selon l'une des revendications 4 et 5, caractérisé en ce qu'un champ de calibrage au moins (28) est aménagé sur le chariot porte-cliché (6) en dehors de la surface de saisie d'image.

10. Dispositif selon la revendication 7, caractérisé en ce que des filtres échangeables (10) sont disposés devant la source de lumière (1).
